# EUROPÄISCHE PATENTANMELDUNG

(11) **EP 2 535 657 A1**
(43) Veröffentlichungstag der Anmeldung: **19.12.2012**
(21) Anmeldenummer: 11169794.2
(22) Anmeldetag: 14.06.2011
(51) Int. Cl.: F24F 13/02, F16L 9/00

(54) **Modulares Fluidleitungsbauteil**

(71) Anmelder: Centrotherm Systemtechnik GmbH, 59929 Brilon (DE)
(72) Erfinder: Korn, Thomas, 44575 Castrop-Rauxel (DE); Liese, Ralf, Dipl.Ing., 59909 Bestwig (DE)
(74) Vertreter: Zenz

(57) **Zusammenfassung**

Bei einem modularen Fluidleitungsbauteil mit mehreren plattenförmig und formstabil ausgebildeten Wandsegmenten (2, 2'; 22, 22'; 42, 42'), wobei benachbarte Wandsegmente (2, 2'; 22, 22'; 42, 42') über wenigstens ein Eckenelement (3; 23; 43) verbunden sind und wobei die Wandsegmente (2, 2'; 22, 22'; 42, 42') in einer Gebrauchsposition einen polygonalen Querschnitt des Fluidleitungsbauteils (1; 21; 41) bilden, soll eine Lösung geschaffen werden, die auf konstruktiv einfache Weise und kostengünstig ein verbessertes Fluidleitungsbauteil bereitstellt, welches gleichzeitig hinsichtlich seiner Lagerung und seines Transports eine platzsparende und ein geringes Volumen einnehmende Position des Fluidleitungsbauteils ermöglicht. Dies wird dadurch erreicht, dass ein jeweiliges Eckenelement (3; 23; 43) sich im Wesentlichen in Längsrichtung des Fluidleitungsbauteils (1; 21; 41) erstreckt und wenigstens ein benachbarte Wandsegmente (2, 2'; 22, 22'; 42, 42') miteinander verbindendes scharnierartiges Gelenkelement (7; 27; 47) umfasst, durch das die Wandsegmente (2, 2'; 22, 22'; 42, 42') aus der Gebrauchsposition in eine Transportposition, in welcher die Wandsegmente (2, 2'; 22, 22'; 42, 42') zusammengeklappt und im Wesentlichen aufeinanderliegend angeordnet sind, schwenkbar sind.

## Beschreibung

Die Erfindung richtet sich auf ein modulares Fluidleitungsbauteil mit mehreren plattenförmig und formstabil ausgebildeten Wandsegmenten, wobei benachbarte Wandsegmente über wenigstens ein Eckenelement verbunden sind und wobei die Wandsegmente in einer Gebrauchsposition einen polygonalen Querschnitt des Fluidleitungsbauteils bilden.

Ein modulares Fluidleitungsbauteil der eingangs genannten Art kann beispielsweise als Fluidleitungskanal in Leitungssystemen eingesetzt werden und ist zum Beispiel in der DE 100 17 567 A1 beschrieben. Dieses modulare Fluidleitungsbauteil umfasst eine Anzahl von plattenförmig ausgebildeten Wandsegmenten, die an ihren parallel zueinander verlaufenden Längskanten mit einem Verbindungsmittel bzw. einem Eckenelement verbunden sind. Als Verbindungsmittel sind Schraubverbindungen vorgesehen, die die aus einem metallischen Material bestehenden Wandsegmente entlang der Längskanten von benachbarten Wandsegmenten lösbar miteinander verbinden. Dieses modulare Fluidleitungsbauteil weist zwar eine gewisse Flexibilität hinsichtlich des Austauschs von Wandsegmenten auf und ist auch für einen platzsparenden Transport geeignet. Nachteilig ist jedoch, dass die Montage bzw. der Zusammenbau des Fluidleitungsbauteils sehr zeitintensiv ist und ferner aufgrund der vorhandenen Schraubverbindungen zusätzliche Dichtmittel an den Verbindungsstellen im Bereich der Längskanten der verbundenen Wandsegmente angebracht werden müssen, was neben erhöhter Bauteilkosten auch die Montagezeit erhöht.

Es sind auch andere metallische Fluidleitungsbauteile bekannt, die bereits mit einem polygonalen und nicht veränderbaren Querschnitt hergestellt und geliefert werden. Solche Fluidleitungsbauteile weisen jedoch den Nachteil auf, dass sie ein großes Volumen bei ihrer Lagerung und beim Transport an ihren Bestimmungsort einnehmen. Darüber hinaus ist die Länge eines solchen Fluidleitungsbauteils nachträglich nicht mehr oder nur in Verbindung mit einem enormen Aufwand abänderbar.

Ferner sind nicht-metallische Fluidleitungsbauteile bekannt, die sich im Allgemeinen durch eine plattenähnliche Bauweise auszeichnen, die am Bestimmungs- bzw. Verbauungsort aus vorgefertigten Elementen zusammengesteckt oder gefügt werden, wobei je nach Dichtigkeitsanforderung an das Fluidleitungsbauteil die Fügestellen mit Silikon oder einem dafür vorgesehenen zusätzlichen Bauteil abgedichtet werden müssen.

Der Erfindung liegt die Aufgabe zugrunde eine Lösung zu schaffen, die auf konstruktiv einfache Weise und kostengünstig ein verbessertes Fluidleitungsbauteil bereitstellt, welches gleichzeitig hinsichtlich seiner Lagerung und seines Transports eine platzsparende und ein geringes Volumen einnehmende Position des Fluidleitungsbauteils ermöglicht.

Bei einem modularen Fluidleitungsbauteil der eingangs bezeichneten Art wird diese Aufgabe erfindungsgemäß dadurch gelöst, dass ein jeweiliges Eckenelement sich im Wesentlichen in Längsrichtung des Fluidleitungsbauteils erstreckt und wenigstens ein benachbarte Wandsegmente miteinander verbindendes scharnierartiges Gelenkelement umfasst, durch das die Wandsegmente aus der Gebrauchsposition in eine Transportposition, in welcher die Wandsegmente zusammengeklappt und im Wesentlichen aufeinanderliegend angeordnet sind, schwenkbar sind.

Vorteilhafte und zweckmäßige Ausgestaltungen und Weiterbildungen der Erfindung ergeben sich aus den Unteransprüchen.

Durch die Erfindung wird ein modulares Fluidleitungsbauteil zur Verfügung gestellt, welches sich durch eine funktionsgerechte Konstruktion auszeichnet und aufgrund seines modularen Aufbaus ein minimales Transportvolumen benötigt. Der modulare Aufbau nach dem Baukastenprinzip ermöglicht, dass das Fluidleitungsbauteil je nach Anzahl der Wandsegmente jeden erdenklichen polygonalen Querschnitt aufweisen kann. Dabei ist durch das zwischen benachbarten Wandsegmenten an deren Längskanten vorgesehene scharnierartig ausgebildete Gelenkelement gewährleistet, dass die Wandsegmente aus der Gebrauchsstellung in eine Transportstellung schwenkbar sind, so dass die einzelnen Wandsegmente quer zur Längsrichtung des Fluidleitungsbauteils klappbar sind und somit das Fluidleitungsbauteil insgesamt flachlegbar und platzsparend transportierbar ist. Das scharnierartig ausgebildete Gelenkelement, welches beispielsweise als formstabiles Scharnier ausgebildet und/oder ein Filmscharnier sein kann, stellt eine dünnwandige Verbindung dar und besteht beispielsweise aus Polypropylen. Dieses Material für das Gelenkelement weist eine ausgezeichnete Verschleißbeständigkeit auf. Die Gelenkelemente üben keine Dehnung auf andere Komponenten des Fluidleitungsbauteils aus, wodurch das Materialspektrum für die Wandsegmente ausgeweitet wird. Vom flachgelegten Transportzustand zum aufgestellten Kanal in Gebrauchsposition werden die Wandsegmente einfach aufgerichtet und entsprechend zueinander ausgerichtet. In der Gebrauchsposition können die Wandsegmente dann mittels einer Rast- oder Arretierungsfunktion, die Teil eines jeweiligen Eckenelements sein kann, oder mittels zusätzlich anzubringender Keilleisten fixiert werden. Alternativ ist auch eine Fixierung der Wandsegmente über Flansche, Kopfstücke oder dergleichen an zumindest einem Längsende des Fluidleitungsbauteils an einer Kanalöffnung denkbar. Die Eckenelemente sind so ausgelegt und ausgebildet, dass ein Flachlegen des Fluidleitungsbauteils ohne Materialschädigung oder ohne Abnahme der Materialeigenschaften der Wandsegmente gewährleistet ist. Das erfindungsgemäße Fluidleitungsbauteil stellt eine komplett modulare Bauweise für Fluidleitungssysteme dar, wodurch die Funktionsweise der Wandsegmente und der Eckenelemente mit scharnierartig ausgebildeten Gelenkelementen mechanisch und funktional komplett entkoppelt ist. Darüber hinaus definieren die Eckenelemente eine genau festgelegte und gut zu reinigende Innenkehle des Fluidleitungsbauteils.

In Weiterbildung des Fluidleitungsbauteils sieht die Erfindung vor, dass ein jeweiliges Eckenelement zweischenklig ausgebildet ist, wobei ein erster Schenkel im Bereich eines Längsendes eines Wandsegments angebracht ist und ein zweiter Schenkel im Bereich eines Längsendes eines benachbarten Wandsegments angebracht ist, wobei das scharnierartige Gelenkelement den ersten Schenkel mit dem zweiten Schenkel schwenkbeweglich verbindet. Auf diese Weise ist eine sichere Verbindung des scharnierartig ausgebildeten Gelenkelements mit den Wandsegmenten und somit die Klappbarkeit der Wandsegmente sichergestellt.

Um zumindest die Längskanten der Wandsegmente gegenüber Beschädigung zu schützen, ist in Ausgestaltung der Erfindung vorgesehen, dass der erste Schenkel und/oder der zweite Schenkel als Profilelement ausgebildet sind/ist, der das entsprechende Wandsegment im Bereich des entsprechenden Längsendes abschnittsweise umfasst und ummantelt. Das Profilelement kann beispielsweise im Querschnitt U-förmig ausgebildet sein und eine Art Schnittkantenschutz bieten, wobei die beiden Schenkel des U-förmigen Profilelements entweder gleich lang oder unterschiedlich lang ausgebildet sein können.

Damit nach Einbau des modularen Fluidleitungsbauteils die Querschnittsform gesichert ist und beibehalten wird, sieht die Erfindung in weiterer Ausgestaltung vor, dass der erste Schenkel und/oder der zweite Schenkel wenigstens ein Einrastmittel aufweist, das in Gebrauchsposition des Fluidleitungsbauteils mit zumindest einem an dem zweiten Schenkel und/oder dem ersten Schenkel ausgebildeten Rückhalteelement in Eingriff bringbar ist. Somit weist entweder einer der beiden Schenkel oder beide Schenkel ein Einrastmittel auf, das mit einem auf dem anderen Schenkel ausgebildeten Rückhalteelement verrastbar ist und in Eingriff gebracht werden kann, so dass die benachbarten Wandsegmente in Position gehalten werden. Dabei kann das Einrastmittel zusammen mit dem Rückhalteelement auch die Funktion einer Arretierung bieten, durch die benachbarte Wandelemente zueinander in Position gehalten werden.

Um die benachbarten Wandsegmente sicher aus der Transportposition in die Gebrauchsposition zu überführen, ist es von besonderem Vorteil, wenn der erste Schenkel und/oder der zweite Schenkel wenigstens einen die Bewegung der Wandsegmente aus der Transportposition in die Gebrauchsposition führenden Führungssteg aufweist, der in Gebrauchsposition des Fluidleitungsbauteils in zumindest einer an dem zweiten Schenkel und/oder dem ersten Schenkel ausgebildeten Führungsausnehmung angeordnet ist.

Ein bei der überwiegenden Anzahl von Fluidleitungsbauteilen auftretendes Problem ist das der unerwünschten Kältebrücken in den Eckenbereichen, wozu bei solchen Fluidleitungsbauteilen zusätzliche und wärmeisolierende Bauteile in den Eckbereichen vorgesehen sind. Hinsichtlich dieses Aspekts sieht die Erfindung in weiterer Ausgestaltung vor, dass vier Wandsegmente einen viereckigen Querschnitt des Fluidleitungsbauteils bilden, wobei in Gebrauchsposition wenigstens ein jeweiliges Längsende von zwei parallel zueinander verlaufenden Wandsegmenten an einer jeweiligen Innenseitenfläche der zwei anderen parallel zueinander verlaufenden Wandsegmente anliegt. Dadurch, dass wenigstens zwei Längsenden von Wandsegmenten an Innenseitenflächen von entsprechend benachbarten Wandsegmenten anliegen, wird zumindest in zwei Eckenbereichen kein zusätzliches Bauteil benötigt, um eine Kältebrücke in diesen Eckenbereichen zu beseitigt.

Besonders von Vorteil ist es, wenn beide Längsenden von zwei parallel zueinander verlaufenden Wandsegmenten an entsprechenden Innenseitenflächen benachbarter Wandsegmente anliegen. Bei dieser Ausgestaltung wird gar kein zusätzliches Bauteil benötigt, welches eine Kältebrücke im Eckenbereich beseitigt.

Auch bei einer alternativen Ausgestaltung, bei der gemäß der Erfindung vorgesehen ist, dass von jedem Wandsegment ein Längsende an einer Innenseitenfläche eines benachbarten Wandsegments anliegt, ist kein zusätzliches Bauteil zur Beseitigung einer Kältebrücke notwendig.

Die Erfindung sieht bei einer weiteren alternativen Ausführungsform vor, dass vier Wandsegmente einen viereckigen Querschnitt des Fluidleitungsbauteils bilden, wobei zumindest in Gebrauchsposition die Wandsegmente mit ihren Innenseitenflächen an ihren Längsenden aneinander anliegen. Diese Art der Verbindung benachbarter Wandsegmente hat den Vorteil eines sehr platzsparenden Zusammenlegens des Fluidleitungsbauteils. Allerdings weisen hierbei die Eckenbereiche eine dünne Wandstärke auf, so dass Maßnahmen zur Beseitigung von Kältebrücken vorzusehen sind.

Um die Steifigkeit des Fluidleitungsbauteils in Längsrichtung zu erhöhen, sieht die Erfindung bei dieser alternativen Ausführungsform vor, dass ein jeweiliges Eckenelement ferner ein sich in Längsrichtung des Fluidleitungsbauteils erstreckendes und stabförmig ausgebildetes Arretierungselement aufweist, welches in Transportposition des Fluidleitungsbauteils auf der Außenseitenfläche eines entsprechenden Wandsegments angeordnet ist und welches in Gebrauchsposition des Fluidleitungsbauteils zwischen den Längsenden von benachbarten Wandsegmenten angeordnet ist und die Wandsegmente keilartig in Position hält.

Um dem bei dieser alternativen Ausführungsform vorherrschenden Problem der Kältebrücke entgegenzuwirken, ist in Weiterbildung der Erfindung vorgesehen, dass das Arretierungselement aus einem wärmeisolierenden Material gebildet ist.

Alternativ zu letztgenannter Maßnahme kann das Arretierungselement hohlförmig ausgebildet sein. Optional kann der Hohlraum des Arretierungselements dann mit einem wärmeisolierenden Material ausgefüllt bzw. ausfüllbar sein.

In weiterer Ausgestaltung des erfindungsgemäßen modularen Fluidleitungsbauteils ist vorgesehen, dass die Wandsegmente zumindest auf ihren Innenseitenflächen mit einer fluidundurchlässigen versehen sind. Die Schicht kann zum Zwecke einer Dampfsperre beispielsweise eine Kunststoffschicht sein. Für die fluidtransportierenden Innenseitenflächen kann ferner beispielsweise eine Folienschicht aus Polyethylenterephthalat (PET) verwendet werden.

Besonders modular bei dem erfindungsgemäßen Fluidleitungsbauteil ist die Möglichkeit, entsprechend der gewünschten Anwendung die Materialien der Wandsegmente auswählen zu können. Daher sieht die Erfindung in Ausgestaltung vor, dass die Wandsegmente aus einem verdichteten, wärmeisolierenden sowie feuerbeständigen Fasermaterial, Verbundwerkstoff oder Hartschaum gebildet sind. Allgemein sind somit Ausführungen mit schwer entflammbaren Materialien, wie alu-kaschierter Steinwolle, denkbar falls eine Feuerwiderstandsfähigkeit erreicht werden soll. Es können Hartschaumplatten oder auch Glaswollplatten mit verschiedenen Kaschierungen, aber auch alle weiteren denkbaren wärmeisolierenden Materialen, zum Einsatz kommen. Dabei kann die Wärmeisolierung durch das Material der Wandsegmente gegeben sein, wohingegen die Wasserdichtheit aus dem aufkaschierten Material stammen kann.

Schließlich ist in Ausgestaltung der Erfindung vorgesehen, dass das die Decke des Fluidleitungsbauteils bildende Wandsegment in Längsrichtung des Fluidleitungsbauteils zweigeteilt ist, wobei die beiden Teile des die Decke bildenden Wandsegments durch ein sich in Längsrichtung des Fluidleitungsbauteils erstreckendes Versteifungsprofil fluidundurchlässig miteinander verbunden sind. Das Versteifungsprofil erhöht die Steifigkeit dieses Wandsegments und wirkt einem auf das Wandsegment einwirkenden Biegemoment entgegen. Durch das Versteifungsprofil können größere Vertikalkräfte von diesem die Decke des Fluidleitungskanals bildenden Wandsegment aufgenommen werden, was dann von Bedeutung ist, wenn von der quadratischen Idealquerschnittsform auf eine rechteckige Querschnittsform mit unterschiedlichen Seitenlängen übergegangen wird, da die Durchbiegung rechnerisch betrachtet nicht proportional zur Seitenlänge ist.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte Ausführungsbeispiele der Erfindung dargestellt sind. In der Zeichnung zeigt:
Figur 1 ein erfindungsgemäßes Fluidleitungsbauteil in Gebrauchsposition gemäß einer ersten Ausführungsform in perspektivischer Ansicht,
Figur 2 das Fluidleitungsbauteil aus Figur 1 in Querschnittsansicht,
Figur 3 das Fluidleitungsbauteil gemäß der ersten Ausführungsform in einer Zwischenstellung zwischen der Gebrauchsposition und einer Transportposition,
Figur 4 das Fluidleitungsbauteil gemäß der ersten Ausführungsform in Transportposition,
Figur 5 das Fluidleitungsbauteil gemäß der ersten Ausführungsform in einer alternativen Transportposition,
Figur 6 ein erfindungsgemäßes Fluidleitungsbauteil in Gebrauchsposition gemäß einer zweiten Ausführungsform in perspektivischer Ansicht,
Figur 7 das Fluidleitungsbauteil aus Figur 6 in Querschnittsansicht,
Figur 8 das Fluidleitungsbauteil gemäß der zweiten Ausführungsform in einer Zwischenstellung zwischen der Gebrauchsposition und einer Transportposition,
Figur 9 eine vergrößerte Ansicht eines ersten Eckenbereichs des Fluidleitungsbauteils in Gebrauchsposition,
Figur 10 eine vergrößerte Ansicht des in Figur 9 gezeigten Eckenbereichs in der Zwischenstellung,
Figur 11 eine vergrößerte Ansicht eines zweiten Eckenbereichs des Fluidleitungsbauteils in Gebrauchsposition,
Figur 12 eine vergrößerte Ansicht des in Figur 11 gezeigten Eckenbereichs in der Zwischenstellung,
Figur 13 ein erfindungsgemäßes Fluidleitungsbauteil in Gebrauchsposition gemäß einer dritten Ausführungsform in perspektivischer Ansicht,
Figur 14 ein Eckenelement des Fluidleitungsbauteils aus Figur 13,
Figur 15 das Fluidleitungsbauteil aus Figur 13 in Querschnittsansicht,
Figur 16 das Fluidleitungsbauteil gemäß der dritten Ausführungsform in einer Zwischenstellung zwischen der Gebrauchsposition und einer Transportposition,
Figur 17 das Fluidleitungsbauteil gemäß der dritten Ausführungsform in Transportposition,
Figur 18 das Fluidleitungsbauteil gemäß der dritten Ausführungsform in einer alternativen Transportposition,
Figur 19 das Fluidleitungsbauteil gemäß der dritten Ausführungsform mit zweigeteiltem Wandsegment in perspektivischer Ansicht und
Figur 20 das Fluidleitungsbauteil aus Figur 19 in Querschnittsansicht.

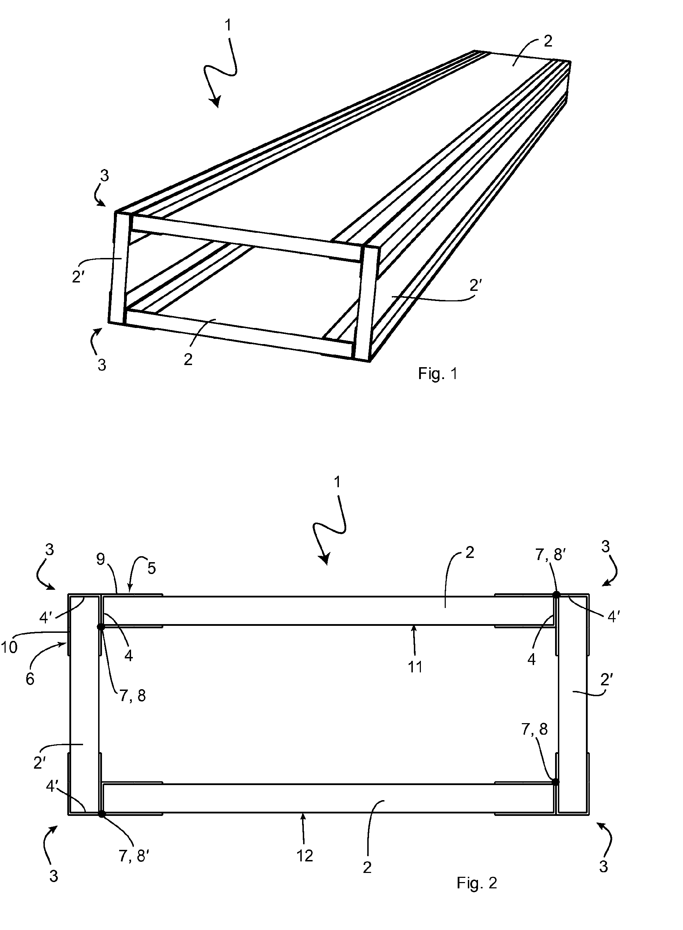

In den Figuren 1 bis 5 ist ein Fluidleitungsbauteil 1 gemäß einer ersten Ausführungsform der Erfindung dargestellt. Der Ausdruck "Fluid" bezieht sich hierbei sowohl auf ein gasförmiges als auch auf ein dampfförmiges Medium, welches durch das kanalförmige Fluidleitungsbauteil 1 geleitet werden soll. Das in diesen Figuren dargestellte modulare Fluidleitungsbauteil 1 umfasst insgesamt vier Wandsegmente 2 und 2', die in Gebrauchsposition, die in den Figuren 1 und 2 gezeigt ist, einen mehreckigen bzw. polygonalen Querschnitt des Fluidleitungsbauteils 1 bilden. In Gebrauchsposition verlaufen jeweils zwei der vier Wandsegmente 2 parallel zueinander, wobei die zwei Wandsegmente 2 waagerecht und die zwei Wandsegmente 2' senkrecht und quer zu den Wandsegmenten 2 verlaufen. Die zwei Wandsegmente 2 bilden dabei eine Boden- bzw. Deckenwand, wohingegen die zwei Wandsegmente 2' die Seitenwände des Fluidleitungsbauteils 1 definieren. In Gebrauchsposition (Figuren 1 und 2) weist das Fluidleitungsbauteil 1 einen rechteckförmigen Querschnitt auf, der von den vier Wandsegmenten 2 und 2' gebildet wird. Die Wandelemente 2 und 2' sind über jeweilige Eckenelemente 3 miteinander verbunden, die im Bereich der Längsenden 4 bzw. 4' der Wandelemente 2 und 2' und in den Eckenpunkten des Fluidleitungsbauteils 1 angeordnet sind.

Ein jeweiliges Eckenelement 3 weist einen ersten Schenkel 5 und einen zweiten Schenkel 6 auf, wobei der erste Schenkel 5 im Bereich eines entsprechenden Längsendes 4 eines jeweiligen waagerecht verlaufenden Wandsegments 2 an diesem angebracht ist, wohingegen der zweite Schenkel 6 im Bereich eines entsprechenden Längsendes 4' eines benachbarten bzw. angrenzenden und senkrecht verlaufenden Wandsegments 2' an diesem angebracht ist. Ein scharnierartig ausgebildetes Gelenkelement 7, dass beispielsweise formstabil ausgebildet und/oder ein Filmscharnier sein kann, verbindet den ersten Schenkel 5 schwenkbeweglich mit dem zweiten Schenkel 6, so dass das waagerecht verlaufende Wandsegment 2 und das benachbarte, senkrecht verlaufende Wandsegment 2' mit Bezug auf Schwenk- bzw. Klappachsen 8 und 8' klappbar zueinander sind. Der erste und der zweite Schenkel 5 und 6 sind jeweils als im Querschnitt U-förmiges Profilelement 9 und 10 ausgebildet. Die U-förmigen Profilelemente 9 und 10 ummanteln die Wandsegmente 2 und 2' im Bereich ihrer entsprechenden Längsenden 4 bzw. 4' nach Art eines Schnittkantenschutzes. Aus Gründen der Übersichtlichkeit sind in Figur 2 die Bezugszeichen für die Längsenden 4 und 4', die Schenkel 5 und 6, die Klappachsen 8 und 8' sowie die Profilelement 9 und 10 nicht an allen Wandsegmenten 2 und 2' und deren Verbindungsstellen eingezeichnet.

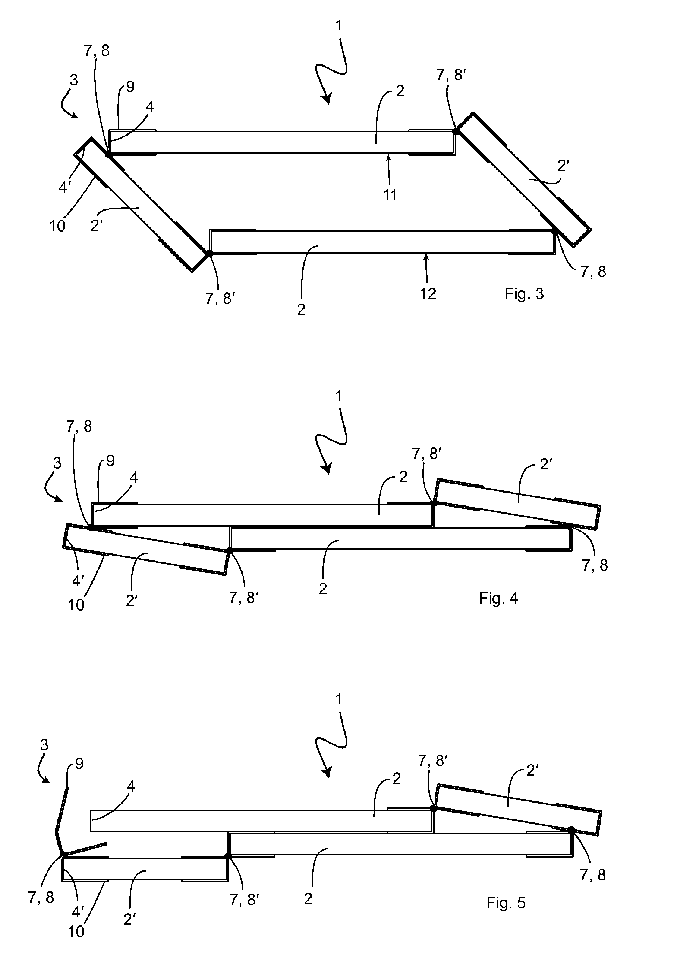

Wie der Figur 2 ferner zu entnehmen ist, sind die in den Ecken des Fluidleitungsbauteils 1 angeordneten jeweiligen Schwenk- bzw. Klappachsen 8 und 8' des Gelenkelements 7 unterschiedlich positioniert. Die zwei Schwenk- bzw. Klappachsen 8 sind im Bereich der Innenseitenflächen 11 der Wandsegmente 2, 2' positioniert bzw. angeordnet, wohingegen die zwei Schwenk- bzw. Klappachsen 8' im Bereich der Außenseitenflächen 12 der Wandsegmente 2, 2' positioniert bzw. angeordnet sind. Dabei sind entlang des Umfangs des Fluidleitungsbauteils 1 die Schwenk- bzw. Klappachsen 8 und 8' des scharnierartig ausgebildeten Gelenkelements 7 abwechselnd an der Innenseitenfläche 11 und an der Außenseitenfläche 12 angeordnet, damit das Fluidleitungsbauteil 1 zusammenlegbar ist, wie nachstehend noch mit Bezug auf die Figuren 3 bis 5 erläutert wird.

Wie aus den Figuren 1 und 2 ersichtlich ist, liegen in Gebrauchsposition des Fluidleitungsbauteils 1 wenigstens ein jeweiliges Längsende 4 von den zwei parallel zueinander verlaufenden Wandsegmenten 2 an einer jeweiligen Innenseitenfläche 11 der zwei anderen parallel zueinander verlaufenden Wandsegmente 2' an. Insbesondere liegen beide Längsenden 4 der zwei waagerecht und parallel zueinander verlaufenden Wandsegmente 2 an den Innenseitenflächen 11 der benachbarten Wandsegmente 2' an. Aufgrund dieser Anordnung weisen die Eckenbereiche des Fluidleitungsbauteils 1 keine Reduzierung der Wandstärke auf, so dass die Gefahr einer Kältebrücke bei dieser ersten Ausführungsform nicht gegeben ist.

In Figur 3 ist das Fluidleitungsbauteil 1 in einer Zwischenstellung zwischen der Gebrauchsposition und einer Transportposition gezeigt. Die zuvor in einem Winkel von 90° zueinander verlaufenden Wandsegmente 2 und 2' sind nun zueinander verschwenkt. Dabei verkleinert sich der von den Wandsegmenten 2 und 2' eingeschlossene Winkel für die Eckenbereiche, bei denen das Gelenkelement 7 im Bereich der Innenseitenflächen 11 positioniert bzw. angeordnet ist, wohingegen sich der der von den Wandsegmenten 2 und 2' eingeschlossene Winkel für die Eckenbereiche verkleinert, bei denen das Gelenkelement 7 im Bereich der Außenseitenflächen 12 positioniert bzw. angeordnet ist. Damit sind jeweils zwei benachbarte Wandsegmente 2 und 2' im Bereich der Innenseite des Fluidleitungsbauteils 1 schwenkbar verbunden und aufeinander zu klappbar bzw. bewegbar, wohingegen die anderen zwei benachbarten Wandsegmente 2 und 2' im Bereich der Außenseite schwenkbar verbunden und voneinander weg klappbar bzw. bewegbar sind. Somit sind die Wandsegmente 2 und 2' nach Art eines Parallelogramms zwischen der Gebrauchsposition und der Transportposition klappbar, wobei es hierzu notwendig ist, dass aufgrund der Dicke der Wandsegmente 2, 2' die Schwenk- bzw. Klappachsen 8 und 8' des scharnierartig ausgebildeten Gelenkelements 7 abwechselnd an der Innenseitenfläche 11 und an der Außenseitenfläche 12 entlang des Umfangs des Fluidleitungsbauteils 1 angeordnet sind. Dabei sind die sich seitlich gegenüberliegenden Schwenk- bzw. Klappachsen 8 und 8' der Eckenelemente 3 nicht auf einer identischen horizontalen Ebene sondern leicht vertikal versetzt angeordnet.

In Figur 4 nehmen die Wandsegmente 2 und 2' des Fluidleitungsbauteils 1 eine mögliche Transportposition ein. In dieser Position sind die beiden Wandsegmente 2 im Wesentlichen aufeinanderliegend und weiterhin waagerecht und parallel zueinander angeordnet. Die zuvor senkrecht ausgerichteten Wandsegmente 2' verlaufen nun auch fast waagerecht, so dass das Fluidleitungsbauteil 1 flach zusammengelegt und für einen platzsparenden Transport geeignet ist.

In Figur 5 ist eine alternative Transportposition des Fluidleitungsbauteils 1 gemäß der ersten Ausführungsform dargestellt, die sich nur unwesentlich von der in Figur 4 gezeigten Transportposition unterscheidet. Wie Figur 5 zu entnehmen ist, ist ein U-förmiges Profilelement 9 des ersten Schenkels 5 des Eckenelements 3 aufklappbar ausgebildet, so dass das Profilelement 9 von dem Wandsegment 2 gelöst werden kann. Dadurch ist das Wandsegment 2' infolge des aufgeklappten bzw. von dem benachbarten Wandsegment 2 gelösten Profilelements 9 noch weiter klappbar, so dass es im Wesentlichen parallel zu den Wandsegmenten 2 angeordnet ist. Es versteht sich, dass alle Profilelement 9 und/oder 10 der Eckenelemente 3 aufklappbar ausgebildet sein können, wodurch das Zusammenlegen des Fluidleitungsbauteils 1 noch effizienter erfolgen kann und darüber hinaus die Wandsegmente 2, 2' variabel und den Anforderungen entsprechend ausgetauscht werden können.

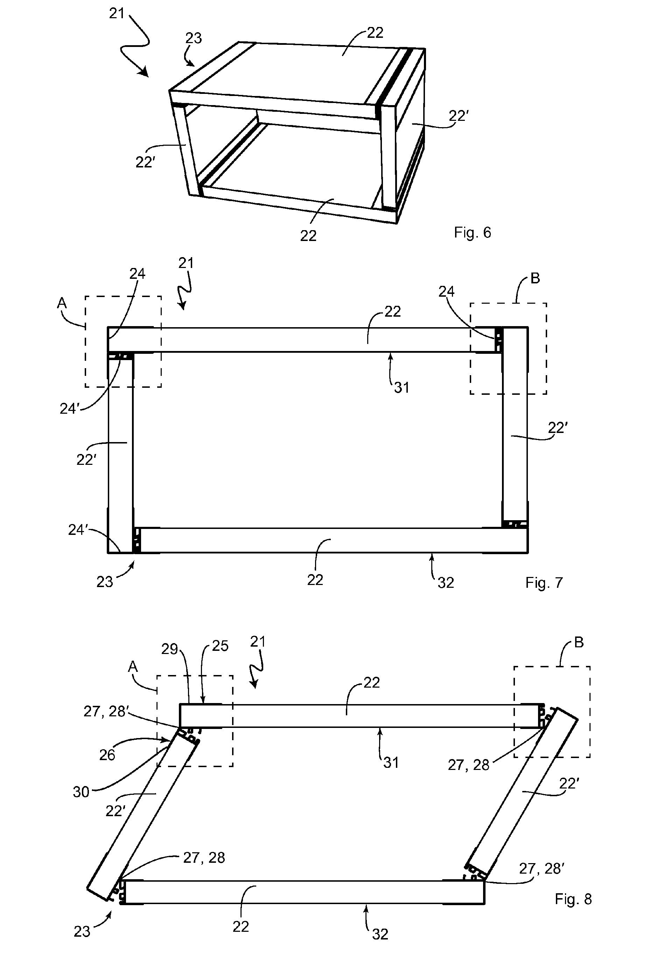

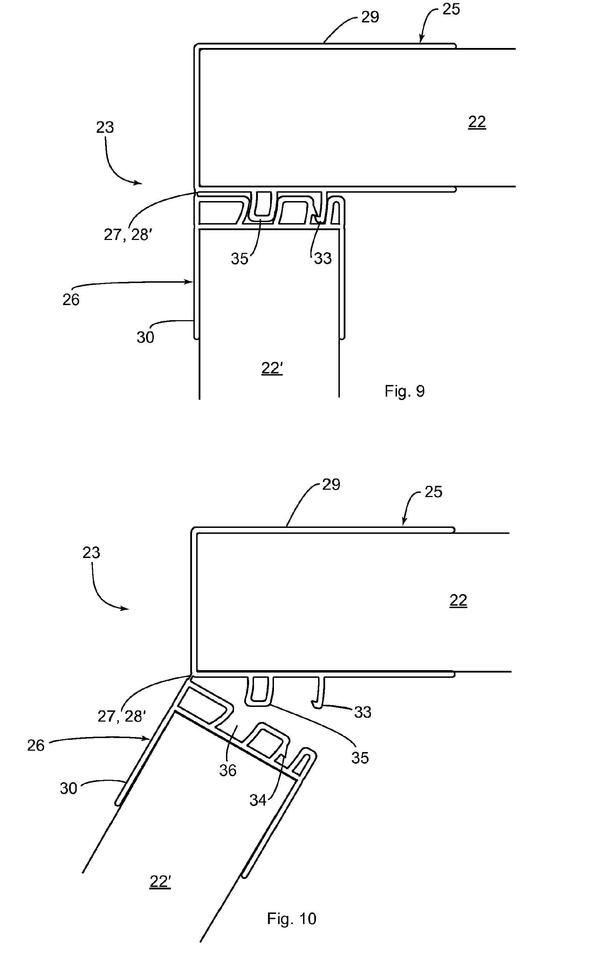

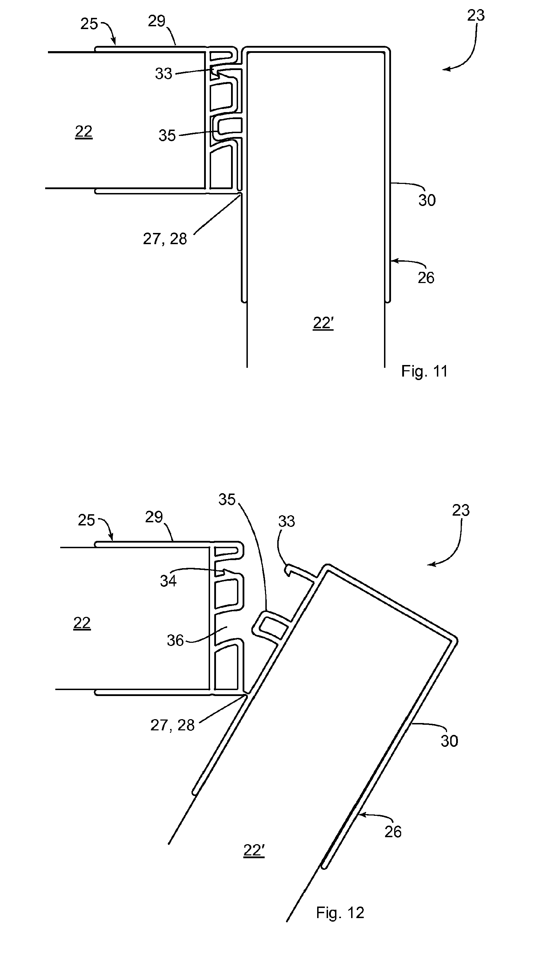

In den Figuren 6 bis 12 ist ein Fluidleitungsbauteil 21 gemäß einer zweiten Ausführungsform dargestellt, wobei das Fluidleitungsbauteil 21 in den Figuren 6 und 7 in der Gebrauchsposition angeordnet ist. Auch das Fluidleitungsbauteil 21 weist insgesamt vier Wandsegmente 22 und 22' auf, die in Gebrauchsposition einen rechteckigen bzw. polygonalen Querschnitt des Fluidleitungsbauteils 21 bilden, wobei jeweils zwei der vier Wandsegmente 22 parallel zueinander und waagerecht verlaufen und die anderen zwei Wandsegmente 22' senkrecht und quer zu den Wandsegmenten 22 verlaufen. Auch bei dieser zweiten Ausführungsform bilden die zwei Wandsegmente 22 eine Boden- bzw. Deckenwand, wohingegen die zwei Wandsegmente 22' die Seitenwände des Fluidleitungsbauteils 21 definieren. In den Eckenpunkten des Fluidleitungsbauteils 21 sind ebenso Eckenelemente 23 vorhanden, die benachbarte Wandelemente 22 und 22' miteinander verbinden. Dabei sind die jeweiligen Eckenelemente 23 im Bereich der Längsenden 24 bzw. 24' der Wandelemente 22 und 22' angeordnet. Ebenso wie bei der ersten Ausführungsform weist ein jeweiliges Eckenelement 23 einen ersten Schenkel 25 und einen zweiten Schenkel 26 auf, die mit den Wandsegmenten 22 und 22' entsprechend verbunden sind, wobei ein scharnierartig ausgebildetes Gelenkelement 27, wie beispielsweise ein Filmscharnier, den ersten Schenkel 25 schwenkbeweglich mit dem zweiten Schenkel 26 verbindet. Dadurch sind das waagerecht verlaufende Wandsegment 22 und das benachbarte, senkrecht verlaufende Wandsegment 22' mit Bezug auf Schwenk- bzw. Klappachsen 28 und 28' klappbar miteinander verbunden. Ebenso sind der erste und der zweite Schenkel 25 und 26 jeweils als im Querschnitt U-förmiges Profilelement 29 und 30 ausgebildet, wie insbesondere den Figuren 9 und 11 in vergrößerter Darstellung zu entnehmen ist. Da die Profilelement 29, 30 den Profilelementen 9 und 10 der ersten Ausführungsform entsprechen, sei auf die vorstehende Beschreibung verwiesen, um Wiederholungen zu vermeiden.

Ein wesentlicher Unterschied zu der ersten Ausführungsform besteht allerdings darin, dass in Gebrauchsposition von jedem Wandsegment 22, 22' ein Längsende 24 vollständig an einer Innenseitenfläche 31 eines benachbarten Wandsegments 22, 22' anliegt. Dennoch ist auch bei dieser Anordnung der Wandsegmente 22, 22' keine Gefahr einer Kältebrücke gegeben.

Figur 8 zeigt das Fluidleitungsbauteil 21 gemäß der zweiten Ausführungsform in einer Zwischenstellung zwischen der Gebrauchsposition und einer Transportposition, wobei die Figuren 10 und 12 vergrößerte Ausschnitte der Eckenbereiche darstellen. Wie bei der ersten Ausführungsform, so sind auch hier in dieser Zwischenstellung die in den Ecken des Fluidleitungsbauteils 21 angeordneten jeweiligen Schwenk- bzw. Klappachsen 28 und 28' des scharnierartigen Gelenkelements 27 unterschiedlich positioniert. Die zwei Schwenk- bzw. Klappachsen 28 sind im Bereich der Innenseitenflächen 31 der Wandsegmente 22, 22' positioniert bzw. angeordnet, wohingegen die zwei Schwenk- bzw. Klappachsen 28' im Bereich der Außenseitenflächen 32 der Wandsegmente 22, 22' positioniert bzw. angeordnet sind. Genauer gesagt sind entlang des Umfangs des Fluidleitungsbauteils 21 die Schwenk- bzw. Klappachsen 28 und 28' der scharnierartig ausgebildeten Gelenkelemente 27 abwechselnd an der Innenseitenfläche 31 und an der Außenseitenfläche 32 angeordnet, damit das Fluidleitungsbauteil 21 derart zusammenlegbar ist, wie es in den Figuren 3 bis 5 für die erste Ausführungsform erläutert wurde. Beim Klappen der Wandsegmente 22, 22' zum Zusammenlegen des Fluidleitungsbauteils 21 verkleinert sich der von den Wandsegmenten 22 und 22' eingeschlossene Winkel für die Eckenbereiche, bei denen das scharnierartige Gelenkelement 27 im Bereich der Innenseitenflächen 31 positioniert bzw. angeordnet ist, wohingegen sich der der von den Wandsegmenten 22 und 22' eingeschlossene Winkel für die Eckenbereiche verkleinert, bei denen das Gelenkelement 27 im Bereich der Außenseitenflächen 32 positioniert bzw. angeordnet ist. Somit sind jeweils zwei benachbarte Wandsegmente 22 und 22' im Bereich der Innenseite des Fluidleitungsbauteils 21 schwenkbar verbunden und aufeinander zu klappbar bzw. bewegbar, wohingegen die anderen Wandsegmente 22 und 22' im Bereich der Außenseite schwenkbar verbunden und voneinander weg klappbar bzw. bewegbar sind. Auch hierbei sind die Wandsegmente 22 und 22' nach Art eines Parallelogramms zwischen der Gebrauchsposition und der Transportposition klappbar, wobei die Schwenk- bzw. Klappachsen 28 und 28' der scharnierartigen Gelenkelemente 27 abwechselnd an der Innenseitenfläche 31 und an der Außenseitenfläche 32 entlang des Umfangs des Fluidleitungsbauteils 21 angeordnet sind. Im Gegensatz zur ersten Ausführungsform sind bei der zweiten Ausführungsform die sich auf verschiedenen Seiten gegenüberliegenden Eckenelemente 23 auf im Wesentlichen identischen horizontalen Ebenen angeordnet.

Ein weiterer Unterschied zu der ersten Ausführungsform besteht darin, dass die Eckenelemente 23 über eine Verriegelungsfunktion verfügen. Zu diesem Zweck weist der erste Schenkel 25 ein angeformtes Einrastmittel 33 nach Art eines Rasthakens auf, der in Gebrauchsposition des Fluidleitungsbauteils 21 mit einem an dem zweiten Schenkel 26 ausgebildeten Rückhalteelement 34 in Eingriff bringbar ist. Das Zusammenwirken von Einrastmittel 33 und Rückhalteelement 34 ist in den Figuren 9 bis 12 dargestellt. Die Figuren 9 und 10 zeigen die vergrößerte Darstellung A eines Eckenbereichs 23 des Fluidleitungsbauteils 21 mit dem im Bereich der Außenseitenfläche 32 angeordneten scharnierartigen Gelenkelements 27, wohingegen die Figuren 11 und 12 die Vergrößerung B eines anderen Eckenbereichs 23 des Fluidleitungsbauteils 21 mit dem im Bereich der Innenseitenfläche 31 angeordneten Gelenkelements 27 darstellen. Das jeweilige in Form eines Rasthakens ausgebildete Einrastmittel 33 ist bei beiden Ausführungen des scharnierartigen Gelenkelements 27 elastisch ausgebildet und kann seitlich aus dem Rückhalteelement 34 heraus bewegt werden, um das Einrastmittel 33 außer Eingriff mit dem Rückhalteelement 34 zu bringen und dadurch die Fixierung bzw. Arretierung der benachbarten Wandelemente 22 und 22' zu lösen, damit das Fluidleitungsbauteil 21 durch klappen bzw. verschwenken der Wandelemente 22 und 22' zum Transport flach zusammengelegt werden kann. Um ein Verkanten des Einrastmittels 33 beim Wechsel in die Gebrauchsposition zu verhindern, weist der erste Schenkel 25 zusätzlich einen die Bewegung der Wandsegmente 22 und 22' aus der Transportposition in die Gebrauchsposition führenden Führungssteg 35 auf, der in Gebrauchsposition des Fluidleitungsbauteils 21 in einer an dem zweiten Schenkel 26 ausgebildeten Führungsausnehmung 36 angeordnet ist.

Es versteht sich, dass das vorstehend beschriebene Einrastmittel 33 sowie der Führungssteg 35 auch an dem gegenüberliegenden Schenkel oder aber an beiden Schenkeln ausgebildet sein kann und dementsprechend ein oder zwei Rückhalteelement 34 sowie Führungsausnehmungen 36 auf den entsprechenden anderen Schenkeln ausgebildet sein können. Auch mehrere Einrastmittel 33 und/oder Führungsstege 35 an einem Schenkel sind denkbar. Ebenso versteht es sich, dass die vorstehend beschriebene Verriegelungsfunktion in Form des Einrastmittels 33 und des Rückhalteelements 34 auch bei dem Eckenelement 3 der ersten Ausführungsform ausgebildet sein kann.

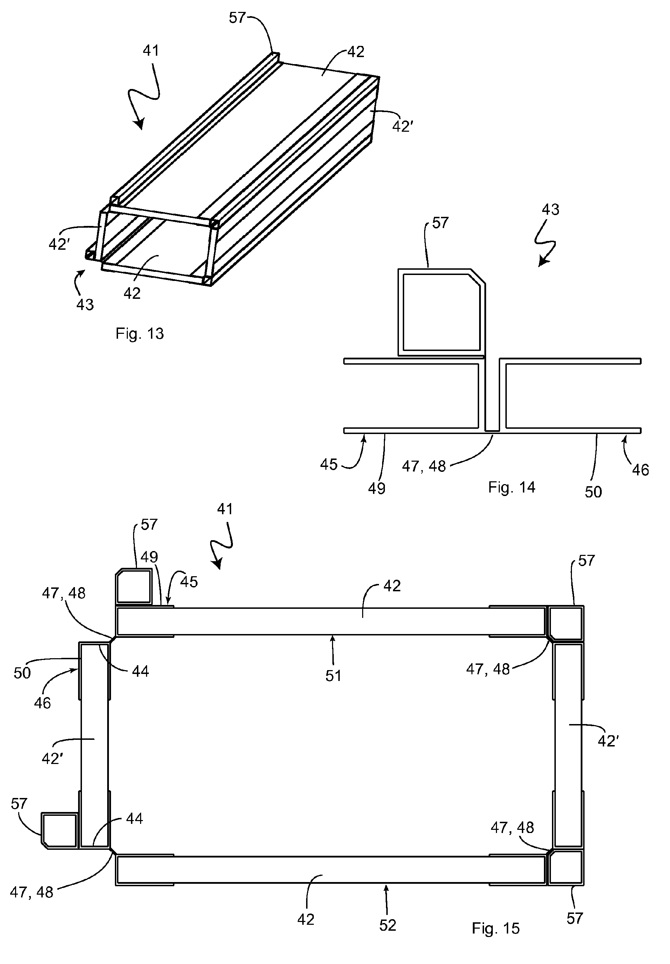

In Figur 13 ist ein Fluidleitungsbauteil 41 gemäß einer dritten Ausführungsform in perspektivischer Ansicht und in Figur 15 in Querschnittsansicht jeweils in Gebrauchsposition dargestellt. Das Fluidleitungsbauteil 41 ist im Querschnitt rechteckförmig, wobei die Querschnittsform ebenfalls wie zuvor von vier plattenförmig und formstabil ausgebildeten Wandsegmenten 42 und 42' gebildet wird. Dabei sind benachbarte Wandsegmente 42 und 42' über jeweils ein in Figur 14 näher dargestelltes Eckenelement 43 an ihren entsprechenden Längsenden 44 verbunden. Das jeweilige, sich in Längsrichtung des Fluidleitungsbauteils 41 erstreckende Eckenelement 43 umfasst einen ersten Schenkel 45 und einen zweiten Schenkel 46, die über ein scharnierartiges Gelenkelement 47 miteinander klappbar verbunden sind, wie insbesondere der Figur 14 zu entnehmen ist. Das nach Art eines Filmscharniers ausgebildete Gelenkelement 47 definiert hierbei die Schwenk- bzw. Klappachse 48. Dabei sind auch bei dieser Ausführungsform die beiden Schenkel 45 und 46 jeweils als U-förmiges Profilelement 49 bzw. 50 ausgebildet, welches die Wandsegmente 42 und 42' im Bereich ihrer Längsenden 44 nach Art eines Schnittkantenschutzes ummantelt.

Bei der dritten Ausführungsform liegen in Gebrauchsposition die Wandsegmente 42 und 42' mit ihren Innenseitenflächen 51 an ihren Längsenden 44 aneinander an, d.h. die Stirnflächen eines jeweiligen Wandsegments 42 und 42' liegen zur Außenseite hin frei, wodurch die Gefahr einer Kältebrücke gegeben ist.

Um dies zu verhindern, umfasst ein jeweiliges Eckenelement 43 ferner ein sich zumindest abschnittsweise in Längsrichtung des Fluidleitungsbauteils 41 erstreckendes und stabförmig ausgebildetes Arretierungselement 57, welches in Transportposition des Fluidleitungsbauteils 41 auf der Außenseitenfläche 52 eines entsprechenden Wandsegments 42, 42' bzw. des ersten Schenkels 45 bzw. des Profilelements 49 über ein weiteres nicht näher dargestelltes Scharnier, beispielsweise ein Filmscharnier, schwenkbar angeordnet ist und welches in Gebrauchsposition des Fluidleitungsbauteils 41 zwischen den Längsenden 44 von benachbarten Wandsegmenten 42, 42' angeordnet ist und die Wandsegmente 42, 42' keilartig in Position hält. In Figur 15 sind zwei der vier Arretierungselemente 57 auf der Außenseitenfläche 52 angeordnet, wohingegen die anderen beiden Arretierungselemente 57 keilartig zwischen den Längsenden 44 der benachbarten Wandsegmenten 42, 42' angeordnet sind und eine Schwenkbewegung der benachbarten Wandsegmenten 42, 42' unterbinden. Die Arretierungselemente 57 definieren eine Art Anschlag und halten die Wandsegmente 42, 42' in Position. Die stab- bzw. stangenförmig ausgebildeten Arretierungselemente 57 können aus einem wärmeisolierenden Material gebildet sein. Alternativ dazu können die Arretierungselemente 57 hohlförmig bzw. mit einem jeweiligen Hohlraum ausgebildet sein, wobei der Hohlraum der Arretierungselements 57 mit einem wärmeisolierenden Material ausgefüllt sein kann.

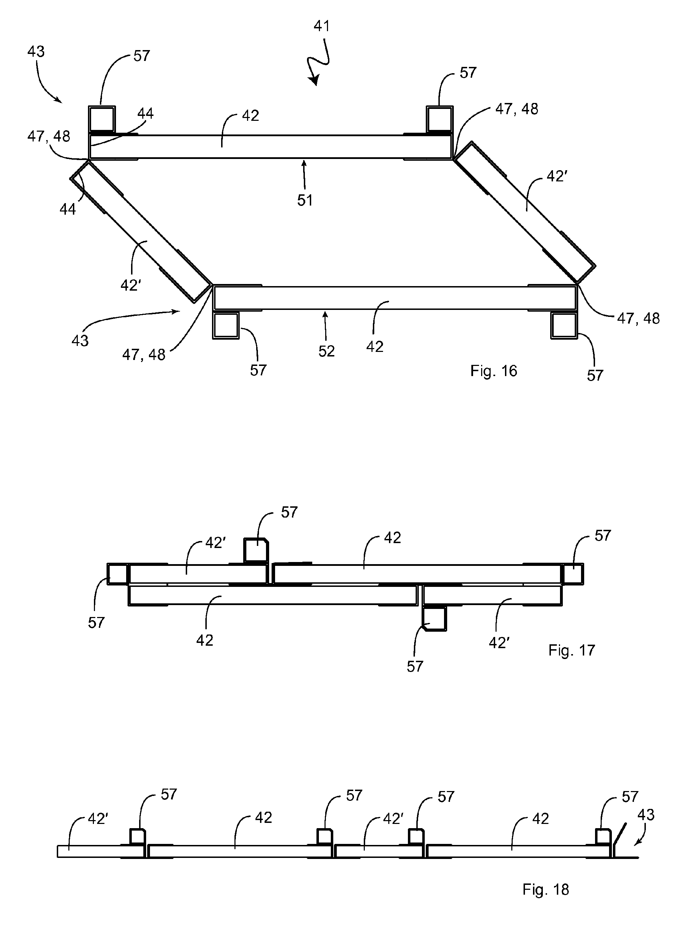

In Figur 16 ist das Fluidleitungsbauteil 41 gemäß der dritten Ausführungsform in einer Zwischenstellung zwischen der Gebrauchsposition und einer Transportposition dargestellt. Um die Wandsegmente 42, 42' derartig klappen bzw. verschwenken zu können, wurden zuvor die Arretierungselemente 57 auf die Außenseite 52 der Wandsegmente 42, 42' geklappt. Wie zu erkennen ist, sind die jeweiligen Schwenk- bzw. Klappachsen 48 im Bereich der Innenseitenflächen 51 der Wandsegmente 42, 42' angeordnet. Aufgrund dieser Anordnung sind die zwei Schenkel 45, 46 der Eckenelemente 43 derart klappbar bzw. schwenkbar, dass die Schenkel 45, 46 in Transportstellung des Fluidleitungsbauteils 41 aufeinander aufliegen, wie in den Figuren 17 und 18 dargestellt ist. Dabei zeigt Figur 17 eine erste Möglichkeit, das Fluidleitungsbauteil 41 zusammenzulegen, bei der die Wandsegmente 42, 42' übereinanderliegend angeordnet sind. In Figur 18 ist zumindest eines der Eckenprofile 43 aufklappbar, so dass ein Längsende 44 des in der Darstellung linken Wandsegments 42' mit keinem Eckenprofil 43 verbunden ist, wodurch die Mantelfläche des Fluidleitungsbauteils 41 geöffnet ist, so dass die Wandsegmente 42, 42' flach nebeneinanderliegend angeordnet werden können.

Es versteht sich, dass die vorstehend für die zweite Ausführungsform beschriebene Verriegelungsfunktion in Form des Einrastmittels 33 und des Rückhalteelements 34 auch bei dem Eckenelement 43 der dritten Ausführungsform entsprechend der vorstehenden Ausführungen ausgebildet sein kann, wodurch beispielsweise das Arretierungselement 57 in Gebrauchsposition des Fluidleitungsbauteils 41 fixiert werden kann.

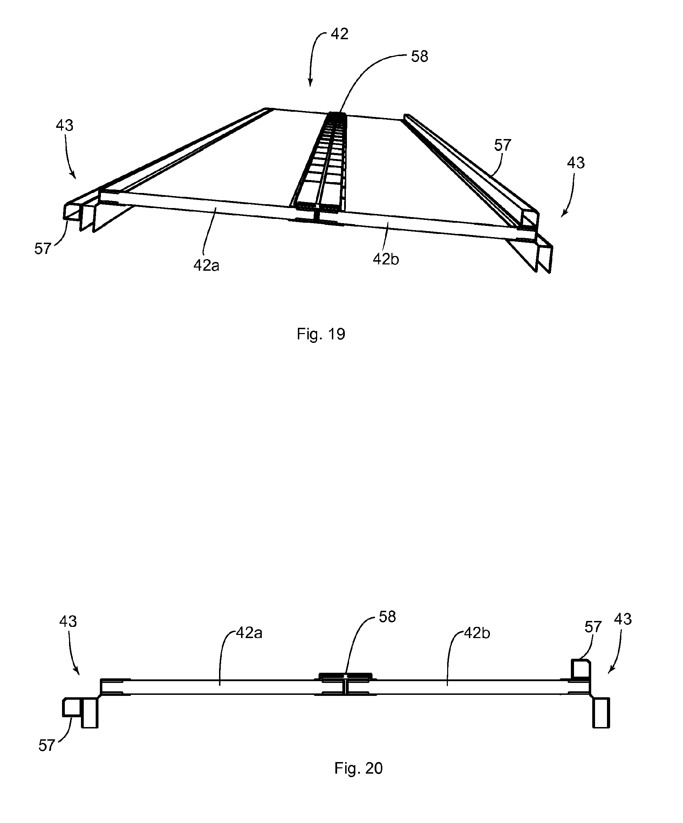

In den Figuren 19 und 20 ist eine Weiterbildung der dritten Ausführungsform dargestellt, die selbstverständlich auch bei der ersten und zweiten Ausführungsform Anwendung finden kann. Bei dieser Weiterbildung ist das die Decke des Fluidleitungsbauteils bildende Wandsegment 42 in Längsrichtung des Fluidleitungsbauteils 41 zweigeteilt. Die beiden Teilabschnitte 42a und 42b bzw. Teile des Wandsegments 42 sind jedoch durch ein sich in Längsrichtung des Fluidleitungsbauteils 41 erstreckendes Versteifungsprofil 58 fluidundurchlässig miteinander verbunden. Das Versteifungsprofil 58 erhöht die Steifigkeit des Wandsegments 42 und wirkt einem auf das Wandsegment 42 einwirkenden Biegemoment entgegen. Durch das Versteifungsprofil 58 können größere Vertikalkräfte von diesem die Decke des Fluidleitungskanals 41 bildenden Wandsegment 42 aufgenommen werden, was dann von Bedeutung ist, wenn von der quadratischen Idealquerschnittsform auf eine rechteckige Querschnittsform mit unterschiedlichen Seitenlängen übergegangen wird.

Die beschriebenen U-förmigen Profilelemente können bei den drei vorstehenden Ausführungsformen nicht nur die Längskanten, sondern auch die Querkanten nach Art eines Kantenschutzes überdecken. Auch können die Eckenelemente Einkerbungen entlang ihrer Längsrichtung aufweisen, wodurch der Fluidleitungskanal einknickbar und dadurch aufrollbar ist. Ferner können bei den drei vorstehend beschriebenen Ausführungsformen die Wandsegmente zumindest auf ihren Innenseitenflächen mit einer fluidundurchlässigen Kunststoffschicht versehen sein. Ferner können die die Wandsegmente aus einem verdichteten, wärmeisolierenden sowie feuerbeständigen Fasermaterial, Verbundwerkstoff oder Hartschaum gebildet sein. Ein aus einem Fasermaterial gebildetes Leitungsbauteil ist bis über 100°C temperaturbeständig und demnach im Wesentlichen feuerbeständig. Als alternatives Material zu anorganischer Mineralwolle kann auch ein flammhemmend organisches Fasermaterial für die Schicht des Fasermaterials des Leitungsbauteils verwendet werden. Durch die in der Schicht aus gepresstem bzw. verpresstem Fasermaterial gebildeten Hohlräume weist das Leitungsbauteil zudem ein besonders gutes Wärmedämmvermögen. Dadurch kommen die vorteilhaften Eigenschaften dieses Materials für die Anwendung als Fluidleitungskanäle wie beispielsweise zur Gebäudebelüftung und -klimatisierung voll zur Geltung. Die in den Eckenbereichen des Fluidleitungskanals vorgesehenen scharnierartigen Gelenkelemente umfassen neben der Funktionalität der Klappbarkeit von benachbarten Wandsegmenten auch eine Dichtfunktion, so dass keine zusätzlichen Bauteile an dem Fluidleitungskanal vorzusehen sind. Die scharnierartigen Gelenkelemente sorgen zusätzlich zu der quer zur Längsrichtung des Fluidleitungsbauteils vorhandenen Klappbarkeit dafür, dass kein Fluid aus dem Inneren des Fluidleitungsbauteils nach außen dringt. Die Querschnittsgröße des Fluidleitungsbauteils wird primär durch die Größe der Wandsegmente bestimmt.

Die vorstehend beschriebene Erfindung ist selbstverständlich nicht auf die beschriebenen und dargestellten Ausführungsformen beschränkt. An den in der Zeichnung dargestellten Ausführungsformen können zahlreiche, dem Fachmann entsprechend der beabsichtigten Anwendung naheliegende Abänderungen vorgenommen werden, ohne dass dadurch der Bereich der Erfindung verlassen wird. Dabei gehört zur Erfindung alles dasjenige, was in der Beschreibung enthalten und/oder in der Zeichnung dargestellt ist, einschließlich dessen, was abweichend von den konkreten Ausführungsbeispielen für den Fachmann naheliegt.

## Patentansprüche

1. Modulares Fluidleitungsbauteil mit mehreren plattenförmig und formstabil ausgebildeten Wandsegmenten (2, 2'; 22, 22'; 42, 42'), wobei benachbarte Wandsegmente (2, 2'; 22, 22'; 42, 42')über wenigstens ein Eckenelement (3; 23; 43) verbunden sind und wobei die Wandsegmente (2, 2'; 22, 22'; 42, 42') in einer Gebrauchsposition einen polygonalen Querschnitt des Fluidleitungsbauteils (1; 21; 41) bilden,
**dadurch gekennzeichnet, dass**
ein jeweiliges Eckenelement (3; 23; 43) sich im Wesentlichen in Längsrichtung des Fluidleitungsbauteils (1; 21; 41) erstreckt und wenigstens ein benachbarte Wandsegmente (2, 2'; 22, 22'; 42, 42') miteinander verbindendes scharnierartiges Gelenkelement (7; 27; 47) umfasst, durch das die Wandsegmente (2, 2'; 22, 22'; 42, 42') aus der Gebrauchsposition in eine Transportposition, in welcher die Wandsegmente (2, 2'; 22, 22'; 42, 42') zusammengeklappt und im Wesentlichen aufeinanderliegend angeordnet sind, schwenkbar sind.

2. Modulares Fluidleitungsbauteil nach Anspruch 1, **dadurch gekennzeichnet, dass** ein jeweiliges Eckenelement (3; 23; 43) zweischenklig ausgebildet ist, wobei ein erster Schenkel (5; 25; 45) im Bereich eines Längsendes (4; 24; 44) eines Wandsegments (2; 22; 42) angebracht ist und ein zweiter Schenkel (6; 26; 46) im Bereich eines Längsendes (4'; 24'; 44) eines benachbarten Wandsegments (2'; 22'; 42') angebracht ist, wobei das scharnierartige Gelenkelement (7; 27; 47) den ersten Schenkel (5; 25; 45) mit dem zweiten Schenkel (6; 26; 46) schwenkbeweglich verbindet.

3. Modulares Fluidleitungsbauteil nach Anspruch 2, **dadurch gekennzeichnet, dass** der erste Schenkel (5; 25; 45) und/oder der zweite Schenkel (6; 26; 46) als Profilelement (9, 10; 29, 30; 49, 50) ausgebildet sind/ist, der das entsprechende Wandsegment (2, 2'; 22, 22'; 42, 42') im Bereich des entsprechenden Längsendes (4, 4'; 24, 24'; 44) abschnittsweise umfasst und ummantelt.

4. Modulares Fluidleitungsbauteil nach Anspruch 2 oder 3, **dadurch gekennzeichnet, dass** der erste Schenkel (25) und/oder der zweite Schenkel (26) wenigstens ein Einrastmittel (33) aufweist, das in Gebrauchsposition des Fluidleitungsbauteils (21) mit zumindest einem an dem zweiten Schenkel (26) und/oder dem ersten Schenkel (25) ausgebildeten Rückhalteelement (34) in Eingriff bringbar ist.

5. Modulares Fluidleitungsbauteil nach einem der Ansprüche 2 bis 4, **dadurch gekennzeichnet, dass** der erste Schenkel (25) und/oder der zweite Schenkel (26) wenigstens einen die Bewegung der Wandsegmente (22, 22') aus der Transportposition in die Gebrauchsposition führenden Führungssteg (35) aufweist, der in Gebrauchsposition des Fluidleitungsbauteils (21) in zumindest einer an dem zweiten Schenkel (26) und/oder dem ersten Schenkel (25) ausgebildeten Führungsausnehmung (36) angeordnet ist.

6. Modulares Fluidleitungsbauteil nach einem der vorhergehenden Ansprüche, **dadurch gekennzeichnet, dass** vier Wandsegmente (2, 2'; 22, 22') einen viereckigen Querschnitt des Fluidleitungsbauteils (1; 21) bilden, wobei in Gebrauchsposition wenigstens ein jeweiliges Längsende (4, 4'; 24, 24') von zwei parallel zueinander verlaufenden Wandsegmenten (2, 2'; 22, 22') an einer jeweiligen Innenseitenfläche (11; 31) der zwei anderen parallel zueinander verlaufenden Wandsegmente (2, 2'; 22, 22') anliegt.

7. Modulares Fluidleitungsbauteil nach Anspruch 6, **dadurch gekennzeichnet, dass** beide Längsenden (4, 4') von zwei parallel zueinander verlaufenden Wandsegmenten (2, 2') an entsprechenden Innenseitenflächen (11) benachbarter Wandsegmente (2, 2') anliegen.

8. Modulares Fluidleitungsbauteil nach Anspruch 6, **dadurch gekennzeichnet, dass** von jedem Wandsegment (22, 22') ein Längsende (24, 24') an einer Innenseitenfläche (31) eines benachbarten Wandsegments (22, 22') anliegt.

9. Modulares Fluidleitungsbauteil nach einem der Ansprüche 1 bis 5, **dadurch gekennzeichnet, dass** vier Wandsegmente (42, 42') einen viereckigen Querschnitt des Fluidleitungsbauteils (41) bilden, wobei zumindest in Gebrauchsposition die Wandsegmente (42, 42') mit ihren Innenseitenflächen (51) an ihren Längsenden (44) aneinander anliegen.

10. Modulares Fluidleitungsbauteil nach Anspruch 9,
**dadurch gekennzeichnet, dass** ein jeweiliges Eckenelement (43) ferner ein sich in Längsrichtung des Fluidleitungsbauteils (41) erstreckendes und stabförmig ausgebildetes Arretierungselement (57) aufweist, welches in Transportposition des Fluidleitungsbauteils (41) auf der Außenseitenfläche (52) eines entsprechenden Wandsegments (42, 42') angeordnet ist und welches in Gebrauchsposition des Fluidleitungsbauteils (41) zwischen den Längsenden (44) von benachbarten Wandsegmenten (42, 42') angeordnet ist und die Wandsegmente (42, 42') keilartig in Position hält.

11. Modulares Fluidleitungsbauteil nach Anspruch 10,
**dadurch gekennzeichnet, dass** das Arretierungselement (57) aus einem wärmeisolierenden Material gebildet ist.

12. Modulares Fluidleitungsbauteil nach Anspruch 10,
**dadurch gekennzeichnet, dass** das Arretierungselement (57) hohlförmig ausgebildet ist, wobei der Hohlraum des Arretierungselements (57) mit einem wärmeisolierenden Material ausfüllbar ist.

13. Modulares Fluidleitungsbauteil nach einem der vorhergehenden Ansprüche, **dadurch gekennzeichnet, dass** die Wandsegmente (2, 2'; 22, 22'; 42, 42') zumindest auf ihren Innenseitenflächen (11; 31; 51) mit einer fluidundurchlässigen Schicht versehen sind.

14. Modulares Fluidleitungsbauteil nach einem der vorhergehenden Ansprüche, **dadurch gekennzeichnet, dass** die Wandsegmente (2, 2'; 22, 22'; 42, 42') aus einem verdichteten, wärmeisolierenden sowie feuerbeständigen Fasermaterial, Verbundwerkstoff oder Hartschaum gebildet sind.

15. Modulares Fluidleitungsbauteil nach einem der vorhergehenden Ansprüche, **dadurch gekennzeichnet, dass** das die Decke des Fluidleitungsbauteils (1; 21; 41) bildende Wandsegment (2; 22; 42) in Längsrichtung des Fluidleitungsbauteils (1; 21; 41) zweigeteilt ist, wobei die beiden Teile (42a, 42b) des die Decke bildenden Wandsegments (2; 22; 42) durch ein sich in Längsrichtung des Fluidleitungsbauteils (1; 21; 41) erstreckendes Versteifungsprofil (58) fluidundurchlässig miteinander verbunden sind.
